# EUROPEAN PATENT APPLICATION

(11) **EP 2 688 157 A2**
(43) Date of publication of application: **22.01.2014**
(21) Application number: 13153266.5
(22) Date of filing: 30.01.2013
(51) Int. Cl.: H01R 31/06, H02J 7/00

(54) **USB converter adaptor**

(30) Priority: 19.07.2012 TW 101213951
(71) Applicant: Karma Medical Products Co., Ltd., Chiayi County 621 (TW)
(72) Inventor: Tsai, Yen-Hsien, 73055 Tainan City (TW)
(74) Representative: Jones, Ithel Rhys

(57) **Abstract**

A USB converter adaptor for a mobility assistive device includes a mobility assistive device connector (3), a DC-to-DC converter (4) and a USB connector (5). The mobility assistive device connector (3) includes a tubular casing (33) and two conductive pins (31) that are disposed in the tubular casing (33) and that are adapted to be coupled to a charging connector of the mobility assistive device so as to be electrically connected to a battery of the mobility assistive device for drawing the battery power from the battery. The DC-to-DC converter (4) is electrically coupled to the mobility assistive device connector (3) for converting the battery power into an output power that has a predetermined voltage value. The USB connector (5) is electrically and fixedly coupled to the DC-to-DC converter (4) for outputting the output power.

## Description

This application claims priority of Taiwanese Application No. 101213951, filed on July 19, 2012.

The invention relates to a USB (universal serial bus) converter adaptor, more particularly to a USB converter adaptor for a mobility assistive device.

As the development of electronic products/devices diversifies, many people carry at least one portable electronic device, such as a mobile phone, and some further carry another portable electronic device, such as a tablet computer, etc. To avoid the hassle of carrying spare batteries for the respective portable electronic devices, there is currently a so-called "USB charger" in the market for charging a portable electronic device by being connected between the portable electronic device and a USB receptacle of, e.g., a desktop computer or a notebook computer, that provides a 5-volt direct-current electricity.

However, this type of "USB chargers" is not convenient for users of a mobile assistive device, e.g., a wheel chairoramotorizedwheelchair, since, beingphysically disabled, reaching for a desktop computer and attempting to connect the "USB charger" thereto might be rather difficult and assistance is often needed.

Now, since a motorized mobility assistive device itself has a battery, if its physically disabled user can utilize this battery which is within his/her reach to charge a portable electronic device, such would be beneficial.

Therefore, the object of the present invention is to provide a USB converter adaptor for a mobile assistive device that can eliminate the aforesaid drawbacks of the prior art.

According to the present invention, there is provided a USB converter adaptor configured to output an output power that is converted from battery power of the mobile assistive device. The USB converter adaptor is characterized by a mobility assistive device connector, a DC-to-DC converter, and a USB connector.

The mobility assistive device connector includes a tubular casing and two conductive pins that are disposed in the tubular casing and that are adapted to be coupled to a charging connector of the mobility assistive device so as to be electrically connected to a battery of the mobility assistive device for drawing the battery power from the battery.

The DC-to-DC converter is electrically coupled to the mobility assistive device connector for converting the battery power into the output power that has a predetermined voltage value.

The USB connector is electrically and fixedly coupled to the DC-to-DC converter for outputting the output power.

Other features and advantages of the present invention will become apparent in the following detailed description of the preferred embodiments with reference to the accompanying drawings, of which:
Figure 1 is an assembledperspective view of the first preferred embodiment of a USB converter adaptor for a mobility assistive device according to the present invention;
Figure 2 is an assembled perspective view of a modification of the first preferred embodiment; and
Figure 3 is an assembled perspective view of the second preferred embodiment of a USB converter adaptor for a mobility assistive device according to the present invention.

Before the present invention is described in greater detail, it should be noted that like elements are denoted by the same reference numerals throughout the disclosure.

According to the present invention, the USB converter adaptor for a mobility assistive device is electrically connectable to a charging connector of a mobility assistive device on one end and to a USB terminal of a portable electronic device on the other end, for outputting an output power that is converted from battery power of the mobility assistive device and that has a predetermined voltage value to the portable electronic device so as to charge the portable electronic device.

In this embodiment, the mobility assistive device maybe an electrically driven mobility assistive device, such as an electric wheelchair, an electric rollator (wheeled walker), etc. The charging connector of the mobility assistive device is used when charging of a battery of the mobility assistive device is needed. The battery power outputted by the battery through the charging connector is a 24 volt direct-current (DC) voltage. The portable electronic device connectable to the charging connector may be a mobile phone, a tablet PC, a digital camera, an MP3 player, a satellite navigation device such as a global positioning system (GPS), a portable game console, or the like.

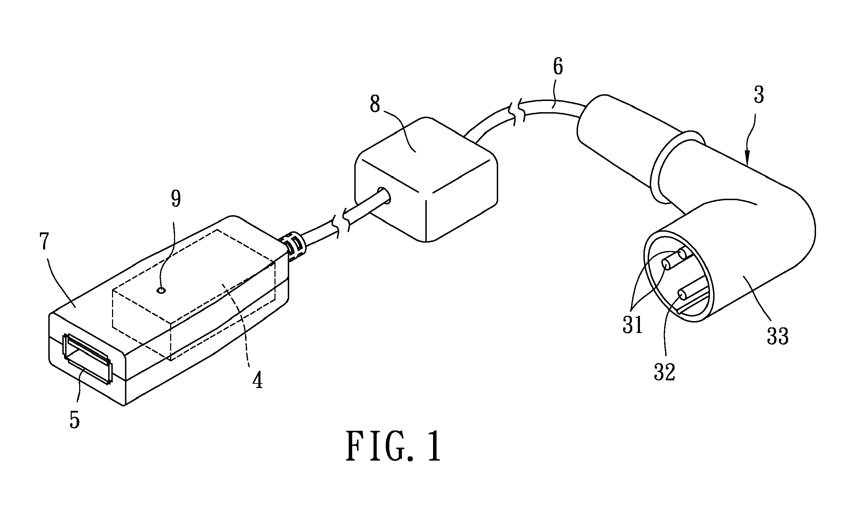

Referring to Figure 1, the first preferred embodiment of the USB converter adaptor according to the present invention includes a mobility assistive device connector 3 adapted to be coupled to the charging connector (not shown) of the mobility assistive device (not shown) so as to be electrically connected to a battery (not shown) of the mobility assistive device for drawing the battery power from the battery, a DC-to-DC converter 4 electrically coupled to the mobility assistive device connector 3 for converting the battery power of the mobility assistive device as received via the charging connector and the mobility assistive device connector 3 into the output power, a USB connector 5 electrically and fixedly coupled to the DC-to-DC converter 4 for outputting the output power, a transmission cable 6 electrically and fixedly coupled between the mobility assistive device connector 3 and the DC-to-DC converter 4, and a housing 7 that houses therein the DC-to-DC converter 4 and the USB connector 5.

It is specified that the charging connector of present mobility assistive devices uses a 3-pin design, which includes an earth pin, a hot pin and a cold pin. In practical use, to charge the battery of the mobility assistive device, a DC charger (not shown) can be connected to the charging connector to output a DC power to the earth pin and the hot pin for charging the battery of the mobility assistive device, and to output a charging signal to the cold pin to indicate that the mobility assistive device operates in a charging mode, where being propelled to move around is prevented.

To accord to the above-mentioned 3-pin design, the mobility assistive device connector 3 of this embodiment is designed as a 3-pin male XLR connector, while the charging connector of the mobility assistive device is a 3-pin female XLR connector. Specifically, the mobility assistive device connector 3 includes two conductive pins 31, a floating pin 32, and a tubular casing 33 surrounding the conductive pins 31 and the floating pin 32. In order to circumvent the situation where the mobility assistive device is mistaken to be in the charging mode due to the connection between the mobility assistive device connector 3 and the charging connector, the design incorporating the floating pin 32 is introduced, where only the earth pin and the hot pin are electrically connected to the transmission cable 6, and in turn to the DC-to-DC converter 4, while the floating pin 32 is not electrically connected to the transmission cable 6, such that the cold pin does not receive any electrical signal from the floating pin 32 when the two are connected.

The USB connector 5 in this embodiment is illustrated as a USB receptacle that is adapted to be connected to the portable electronic device for charging the portable electronic device with the output power.

The USB converter adaptor of this embodiment further includes a cable winder 8 mounted to the transmission cable 6 for winding the transmission cable 6 thereon. The cable winder 8 is configured such that the transmission cable 6 can be pulled outward therefrom and be positioned at a specific length. For the sake of brevity, since the operation of the cable winder 8 and various types of cable winders are well known, further details of the same will be omitted herein.

The DC-to-DC converter 4 is used to convert the 24-volt battery power of the mobility assistive device into the output power at the predetermined voltage value, which in this case, is 5 volts. For the sake of brevity, since the DC-to-DC converter 4 is well known in the art, further details of the same will be omitted herein.

The USB converter adaptor of this embodiment further includes a light indicator 9 electrically connected to the DC-to-DC converter 4, visible from the housing 7, and driven by the output power from the DC-to-DC converter 4 to emit light for indicating that the DC-to-DC converter 4 is providing the output power properly. The USB connector 5 is connectable with a transmission cable connected to the portable electronic device so as to provide the output power to the portable electronic device for purposes of, such as charging the portable electronic device.

Therefore, the user can connect the mobility assistive device connector 3 and the USB connector 5 of the USB converter adaptor of the present invention respectively to the charging connector of the mobility assistive device (not shown) and the portable electronic device (not shown) to easily utilize the battery power of the mobility assistive device to charge the portable electronic device. The user is also notified of the presence or lack of the output power from the USB connector 5 by observing the light indicator 9. The following conditions are some of the possible causes for the light indicator 9 to not emit light: there is insufficient battery power from the mobility assistive device; there is poor contact between the mobility assistive device connector 3 and the charging connector of the mobility assistive device; and the USB converter adaptor is damaged. Once the cause is identified, the user can take the correct remedial action.

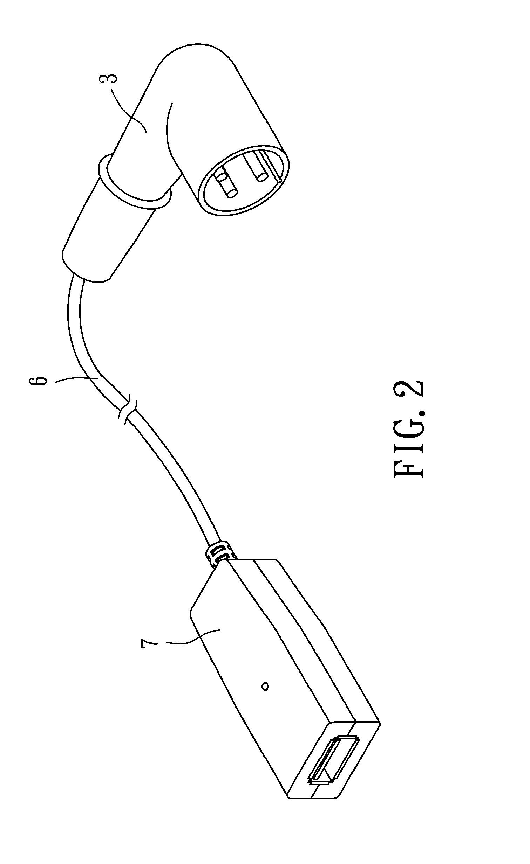

It is noted herein that according to the first preferred embodiment, the cable winder 8 is optional, and may be omitted as shown in Figure 2.

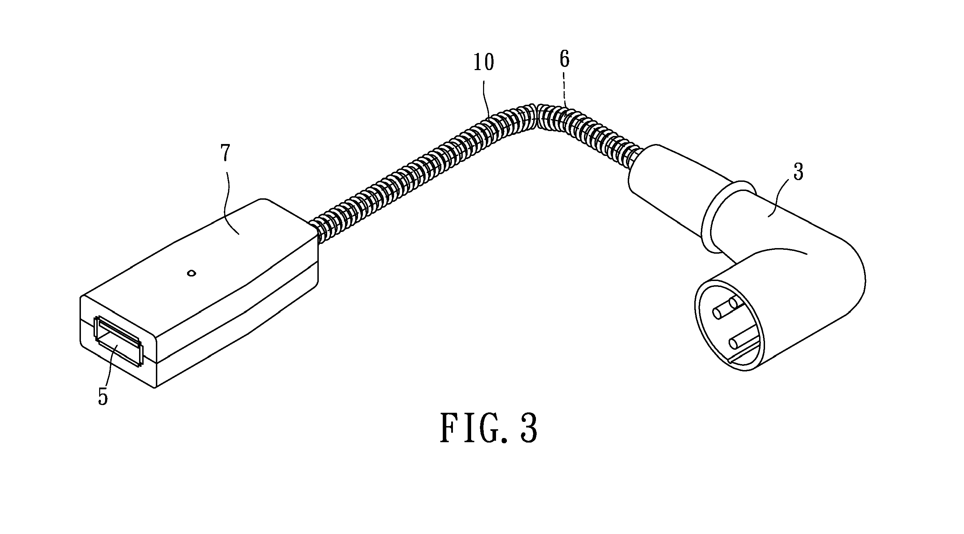

Referring to Figure 3, the second preferred embodiment of a USB converter adaptor for a mobility assistive device according to this invention is shown to be similar to the first preferred embodiment, with the only difference being that the second preferred embodiment further includes a flexibly deformable spiral pipe 10 sleeved on the transmission cable 6 and fixed between the mobility assistive device connector 3 and the housing 7. The structural design of the spiral pipe 10 allows the user to flexibly manipulate the direction of the USB connector 5 as needed.

In sum, by providing a mobility assistive device connector 3 to adapt the USB converter adaptor to be connectable with a standard charging connector of a mobility assistive device, this invention facilitates convenient charging of a portable electronic device for a user of the mobility assistive device by using the battery power of the mobility assistive device which is within his/her reach. Therefore, the purpose of this invention is served.

While the present invention has been described in connection with what are considered the most practical and preferred embodiments, it is understood that this invention is not limited to the disclosed embodiments but is intended to cover various arrangements included within the spirit and scope of the broadest interpretation so as to encompass all suchmodifications and equivalent arrangements.

## Claims

1. A universal serial bus (USB) converter adaptor for a mobility assistive device, said converter adaptor being configured to output an output power that is converted from battery power of the mobility assistive device, and being **characterized by**:
a mobility assistive device connector (3) including a tubular casing (33) and two conductive pins (31) that are disposed in said tubular casing (33) and that are adapted to be coupled to a charging connector of the mobility assistive device so as to be electrically connected to a battery of the mobility assistive device for drawing the battery power from the battery;
a DC-to-DC converter (4) electrically coupled to said mobility assistive device connector (3) for converting the battery power into the output power that has a predetermined voltage value; and
a USB connector (5) electrically and fixedly coupled to said DC-to-DC converter (4) for outputting the output power.

2. The USB converter adaptor for a mobility assistive device as claimed in Claim 1, **characterized in that** said DC-to-DC converter (4) performs a down-conversion on the battery power to result in the output power.

3. The USB converter adaptor for a mobility assistive device as claimed in Claim 1, further **characterized by** a transmission cable (6) electrically and fixedly coupled between said mobility assistive device connector (3) and said DC-to-DC converter (4).

4. The USB converter adaptor for a mobility assistive device as claimed in Claim 3, further **characterized by** a cable winder (8) that is mounted to said transmission cable (6) for winding said transmission cable thereon.

5. The USB converter adaptor for a mobility assistive device as claimed in Claim 3, further **characterized by** a housing (7) that houses therein said DC-to-DC converter (4) and said USB connector (5), and a spiral pipe (10) sleeved on said transmission cable (6) and fixed between said mobility assistive device connector (3) and said housing (7), said spiral pipe (10) being flexibly deformable.

6. The USB converter adaptor for a mobility assistive device as claimed in Claim 1, further **characterized by** a housing (7) that houses therein said DC-to-DC converter (4) and said USB connector (5).

7. The USB converter adaptor for a mobility assistive device as claimed in Claim 6, further **characterized by** a light indicator (9) connected electrically to said DC-to-DC converter (4), visible from said housing (7), and driven by the output power from said DC-to-DC converter (4) to emit light.

8. The USB converter adaptor for a mobility assistive device as claimed in Claim 1, **characterized in that** said mobility assistive device connector (3) further includes a floating pin (32).

9. The USB converter adaptor for a mobility assistive device as claimed in Claim 8, **characterized in that** said mobility assistive device connector (3) is a 3-pin male XLR connector.

10. The USB converter adaptor for a mobility assistive device as claimed in Claim 1, **characterized in that** said USB connector (5) is a USB receptacle that is adapted to be connected to a portable electronic device for charging the portable electronic device with the output power.
